Europäisches Patentamt

European Patent Office

Office européen des brevets

(19)

(11) **EP 1 291 868 A1**

(12) ## DEMANDE DE BREVET EUROPEEN

(43) Date de publication:
**12.03.2003 Bulletin 2003/11**

(51) Int Cl.7: **G11B 20/00**

(21) Numéro de dépôt: **02354141.0**

(22) Date de dépôt: **11.09.2002**

| | |
|---|---|
| (84) Etats contractants désignés:<br>**AT BE BG CH CY CZ DE DK EE ES FI FR GB GR**<br>**IE IT LI LU MC NL PT SE SK TR**<br>Etats d'extension désignés:<br>**AL LT LV MK RO SI** | (72) Inventeurs:<br>• **Wuidart, Luc**<br>**83910 Pourrieres (FR)**<br>• **Balthazar**<br>**13100 Aix en Provence (FR)** |
| (30) Priorité: **11.09.2001 FR 0111718** | (74) Mandataire: **de Beaumont, Michel**<br>**1, rue Champollion** |
| (71) Demandeur: **STMicroelectronics S.A.**<br>**92120 Montrouge (FR)** | **38000 Grenoble (FR)** |

(54) **Procédé et dispositif de stockage et de lecture de données numériques sur un support physique**

(57) L'invention concerne un procédé et dispositif de stockage sécurisé, par un enregistreur (3), de données numériques sur un support physique (10, 11, 12) équipé d'un moyen de calcul (1), comprenant, lors d'une première utilisation du support en écriture, les étapes suivantes : mémoriser dans le support ou son moyen de calcul, et de manière non-volatile, au moins un identifiant (RDi) d'un lecteur du support ; et stocker les données de façon chiffrée au moyen d'une clé de chiffrement contenue, à demeure, dans ledit support ou son moyen de calcul. L'invention concerne également un procédé et dispositif de lecture de telles données chiffrées.

Fig 1

EP 1 291 868 A1

## Description

La présente invention concerne le stockage de données numériques, plus précisément de données multimédia, sur un support physique. L'invention concerne plus particulièrement la protection des données contenues sur le support contre des reproductions non autorisées par le créateur du support concerné. Par créateur du support, on entend celui qui a, le premier, procédé à l'enregistrement de ces données sur le support physique concerné. Il ne s'agit donc pas nécessairement de l'auteur du contenu des données multimédia, ni du fabricant du support.

Un exemple d'application de la présente invention concerne les supports multimédia destinés à recevoir des fichiers musicaux ou images sous forme numérique.

On a déjà proposé de chiffrer ou crypter des données enregistrées sur un support multimédia (par exemple, un CD-ROM, une disquette numérique, etc.) afin que ces données ne puissent être lues que par un lecteur déterminé possédant la clé de chiffrement. Toutefois, sauf à individualiser la fabrication des supports et l'enregistrement des données chez le fabricant pour individualiser la clé en fonction de l'utilisateur, un même support peut être lu par n'importe quel lecteur possédant cette clé. Or, l'objectif est précisément d'interdire la lecture du support physique par un lecteur non autorisé.

Un exemple de système de protection de copies illicites d'un support numérique quelconque est décrit dans la note "Content protection for recordable media specification"-"Introduction and common cryptographic elements", publiée par 4C-entity, Rev 0.93 le 28 juin 2000.

Les systèmes connus ont l'inconvénient supplémentaire de ne pas permettre, à un utilisateur d'un appareil enregistreur, de protéger ses propres données, par exemple, ses photographies numériques lors d'un enregistrement sur un disque de stockage. Seul le fabricant est en mesure de protéger les données.

La présente invention vise à améliorer les systèmes de protection de données numériques, contenues sur des supports physiques, contre des copies non autorisées par l'auteur ou analogue.

L'invention vise également à permettre à tout créateur de support enregistré (l'utilisateur d'un lecteur-enregistreur ou du moyen de stockage), de protéger les données à l'enregistrement du support.

L'invention vise également à préserver la possibilité de protéger les données à la fabrication tout en permettant de sélectionner des lecteurs habilités.

L'invention vise également à ce que le créateur du support enregistré sélectionne lui-même, lors d'un enregistrement, le ou les lecteurs autorisés à lire les données contenues dans le moyen de stockage.

L'invention vise également à ce qu'il soit possible de modifier le contenu du support de stockage ainsi que les lecteurs habilités à en lire les données, après un premier enregistrement, sous réserve que ce cela soit effectué par le créateur du support enregistré.

Pour atteindre ces objets et d'autres, la présente invention prévoit un procédé de stockage sécurisé, par un enregistreur, de données numériques sur un support physique équipé d'un moyen de calcul, comprenant, lors d'une première utilisation du support en écriture, les étapes suivantes :

mémoriser dans le support ou son moyen de calcul, et de manière non-volatile, au moins un identifiant d'un lecteur du support ; et
stocker les données de façon chiffrée au moyen d'une clé de chiffrement contenue, à demeure, dans ledit support ou son moyen de calcul.

Selon un mode de mise en oeuvre de la présente invention, la clé de chiffrement est transmise à l'enregistreur de façon cryptée au moyen d'un algorithme symétrique à partage de clé de cryptage sans transmission de celle-ci.

Selon un mode de mise en oeuvre de la présente invention, l'algorithme prend en compte un identifiant de l'enregistreur.

Selon un mode de mise en oeuvre de la présente invention, la clé de chiffrement est transmise à l'enregistreur de façon cryptée au moyen d'un algorithme asymétrique de transfert de clé de cryptage.

Selon un mode de mise en oeuvre de la présente invention, lors de la première utilisation du support en écriture, on mémorise de manière non-volatile, sur le support ou son moyen de calcul, au moins un code d'authentification d'un utilisateur.

Selon un mode de mise en oeuvre de la présente invention, ledit moyen de calcul est un circuit intégré.

Selon un mode de mise en oeuvre de la présente invention, la clé de chiffrement est contenue dans le moyen de calcul, de préférence, au moins partiellement dans un réseau de paramètres physique du circuit intégré.

Selon un mode de mise en oeuvre de la présente invention, le support est divisé en secteurs, un code d'identification et/ou un code d'authentification étant affecté à chaque secteur ou groupes de secteurs.

Selon un mode de mise en oeuvre de la présente invention, le procédé de stockage comporte les étapes suivantes :

transmettre, de l'enregistreur vers le support physique, une liste d'identifiants de lecteurs habilités ;
stocker cette liste dans le support physique ;
transmettre, du support physique vers l'enregistreur, une clé de chiffrement cryptée par un algorithme à partage ou transfert de clé de cryptage ;
décrypter ladite clé de chiffrement côté enregistreur ;

chiffrer, côté enregistreur, les données à stocker ; et transmettre les données chiffrées au support physique.

L'invention prévoit également un procédé de lecture, par un lecteur, de données numériques chiffrées sur un support physique équipé d'un moyen de calcul, comprenant les étapes suivantes :

communiquer au support un identifiant du lecteur ; vérifier, côté support physique, que le lecteur appartient à une liste de lecteurs habilités, pré-enregistrée dans le support ou son moyen de calcul ; et dans l'affirmative, transmettre au lecteur les données chiffrées et une clé de chiffrement cryptée, pour lui permettre de déchiffrer les données.

Selon un mode de mise en oeuvre de la présente invention, le cryptage de la clé de chiffrement est effectué par ledit moyen de calcul du support physique au moyen d'un algorithme symétrique à partage de clé de cryptage sans transmission de celle-ci.

Selon un mode de mise en oeuvre de la présente invention, l'algorithme prend en compte l'identifiant du lecteur.

Selon un mode de mise en oeuvre de la présente invention, le cryptage de la clé de chiffrement est effectué par ledit moyen de calcul du support physique au moyen d'un algorithme asymétrique à transfert de clé de cryptage.

Selon un mode de mise en oeuvre de la présente invention, en cas de vérification négative de l'existence du lecteur dans la liste des lecteurs habilités, on effectue les étapes suivantes :

demander un code d'authentification ; comparer ce code à un code pré-enregistré dans le support physique ou son moyen de calcul ; et en cas d'identité des codes : autoriser une modification de la liste des lecteurs habilités sur le support physique ou son moyen de calcul.

L'invention prévoit également un support physique de données numériques, comportant un circuit intégré.

L'invention prévoit également un enregistreur de données numériques sur un support physique.

L'invention prévoit en outre un lecteur de données numériques sur un support physique.

Ces objets, caractéristiques et avantages, ainsi que d'autres de la présente invention seront exposés en détail dans la description suivante de modes de mise en oeuvre et réalisation particuliers faite à titre non-limitatif en relation avec les figures jointes parmi lesquelles :

la figure 1 représente, de façon très schématique, un mode de réalisation d'un système de stockage sécurisé selon la présente invention ;

la figure 2 illustre, par un organigramme simplifié, un mode de mise en oeuvre préféré du procédé de stockage selon la présente invention ;

la figure 3 illustre, par un organigramme simplifié, un mode de mise en oeuvre préféré d'un procédé de lecture de données selon la présente invention ; et

la figure 4 illustre, par un organigramme simplifié, un mode de mise en oeuvre préféré d'un procédé de mise à jour d'une liste de lecteurs habilités et/ou du contenu d'un support physique selon la présente invention.

Les mêmes éléments et étapes de procédés ont été désignés par les mêmes références aux différentes figures. Pour des raisons de clarté, seuls les éléments du système et les étapes de procédé qui sont nécessaires à la compréhension de l'invention ont été illustrés aux figures et seront décrits par la suite. En particulier, les calculs mis en oeuvre par les algorithmes de cryptage et de chiffrement proprement dits n'ont pas été détaillés et ne font appel qu'à des opérations courantes. De plus, les moyens d'échange de données entre les lecteurs-enregistreurs et les supports de données n'ont pas été détaillés et ne font pas l'objet de l'invention.

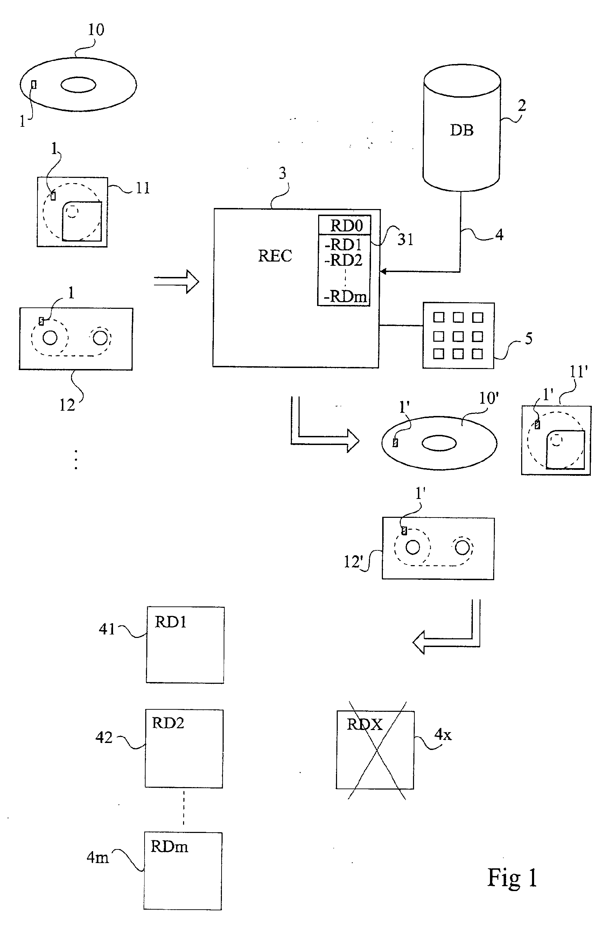

La figure 1 est une représentation très schématique d'un système de stockage sécurisé et d'exploitation de données stockées sur des supports physiques selon l'invention.

Un support physique utilisable dans le cadre de la présente invention est constitué de n'importe quel support physique de stockage de données numériques, pourvu qu'il puisse inclure ou être équipé d'un moyen de calcul. Par exemple et comme l'illustre la figure 1, il pourra s'agir d'un CD-ROM 10, d'un disque 11, d'une cassette numérique 12. Selon l'invention, ces supports sont pourvus d'un moyen de calcul, par exemple, une puce de circuit intégré 1. Cette puce est rapportée physiquement sur le support lui-même. La puce 1 est destinée à contenir une clé d'authentification et/ou de chiffrement et à exécuter certains calculs d'authentification et de cryptage comme on le verra par la suite. En variante, la ou les clés sont stockées dans une zone du support physique. Différents moyens peuvent être utilisés pour associer une puce de circuit intégré ou analogue à un support physique de stockage de données numériques. Un exemple de support physique de données équipé d'une puce est décrit dans le document FR-A-2 751 767. Le support physique et la puce peuvent même être confondus, par exemple, dans le cas d'une carte à puce pourvue de mémoires numériques de capacité importante (plusieurs Mega-octets), par exemple, une mémoire flash.

Des données numériques à stocker (par exemple, des fichiers audio ou vidéo) sont initialement contenues dans un élément source, par exemple, de type base de données 2 (DB). Il pourra également s'agir de sources de données distantes provenant d'un réseau numérique privé (intranet) ou public (internet) ou de tout autre élément contenant des données numériques multimédia. Il pourra même s'agir d'un support physique de stockage 10, 11 ou 12 du type de ceux mis en oeuvre par la présente invention.

Pour stocker des données numériques contenues dans l'élément source sur un support physique de l'invention, on utilise un enregistreur 3 (REC) ou lecteur-enregistreur capable de recevoir, par une liaison 4, les données contenues dans la base de données 2, et comprenant des moyens de lecture-écriture (non détaillés) d'au moins un des supports physiques 10, 11 ou 12.

L'enregistreur 3 de l'invention reproduit, après les avoir chiffrées comme cela sera décrit par la suite, les données numériques multimédia sur le support adapté. Selon l'invention, l'enregistreur 3 déclenche également le stockage, dans la puce 1 ou analogue du support physique 10, 11 ou 12, d'une liste de codes d'identification de lecteurs RDi autorisés ou habilités à lire les données. Ainsi, l'enregistreur 3 de l'invention contient une liste 31 (RD1, RD2, ... RDi, ... RDm) d'identifiants numériques de lecteurs pour lesquels le créateur du support autorise, à l'avenir, la lecture des données stockées dans le support physique qu'il fournit. Cette liste est, par exemple, saisie par le créateur au moyen d'un clavier 5 associé à l'enregistreur ou téléchargée depuis l'élément source, etc. Les supports enregistrés, fournis par l'enregistreur 3, ont été illustrés en figure 1 sous des références 10', 11' et 12'. Les puces correspondantes ont été hachurées et référencées 1' pour indiquer leur état modifié.

Dans l'exemple de la figure 1, l'enregistreur 3 est également un lecteur ayant comme identifiant RD0. Cet identifiant est également contenu dans la liste 31 enregistrée sur la puce 1'.

Par la suite, les supports enregistrés peuvent être lus par n'importe quel lecteur autorisé 41, 42, ..., 4m. Ces lecteurs sont, selon l'invention, capables de déchiffrer les données à partir du moment où la puce du support physique contient leur identifiant (RD1, RD2... RDm). Cet identifiant permet, comme on le verra par la suite, au support de transmettre la clé de chiffrement autrement inconnue du lecteur. Par contre, si le support physique est introduit dans un lecteur 4x non autorisé (d'identifiant RDx), celui-ci sera incapable de restituer les données multimédia dans la mesure où la clé de chiffrement ne lui sera pas communiquée.

Selon un mode de réalisation préféré de l'invention, plus particulièrement destiné à permettre une mise à jour des données stockées sur le support physique et/ou une mise à jour de la liste des lecteurs habilités, on prévoit de mémoriser, lors du premier enregistrement du support, un code d'authentification de l'utilisateur dans la puce 1' de circuit intégré. Par exemple, le créateur du support enregistré utilise le clavier 5 ou tout autre moyen fonctionnellement équivalent pour fournir un code d'authentification et l'enregistrer sur le support physique de données (de préférence, dans la puce de celui-ci) lors de la première utilisation en stockage ou enregistrement. Par la suite, une modification de la liste des lecteurs habilités et/ou des données mémorisées sera permise si l'utilisateur du support peut fournir ce code d'authentification. Dans le cas contraire, la liste des lecteurs habilités et les données contenues dans le support physique ne pourront plus être modifiées.

Une caractéristique de l'invention est que la clé de chiffrement des données est propre à la puce située sur ou dans le moyen de stockage, et n'est pas liée aux lecteurs. Il en est de même pour la clé d'authentification optionnelle de l'utilisateur. Ainsi, la personnalisation (liste des lecteurs habilités) peut s'effectuer lors du premier enregistrement d'un support vierge, ce qui rend le système particulièrement versatile. Il n'est toutefois pas exclu que la liste des lecteurs autorisés soit figée lors de la fabrication en série du support de données multimédia. Dans ce cas, il suffit de ne pas prévoir de mise à jour possible par saisie d'un code d'authentification et on disposera d'un support de données multimédia protégé, dont la lecture ne pourra être effectuée que par des lecteurs ayant des identifiants autorisés, les autres lecteurs n'étant pas à même de décrypter les données.

Un avantage de l'invention est que la clé de chiffrement n'a pas besoin d'être enregistrée dans les lecteurs habilités, ni de leur être communiquée par un organisme tiers. Seul le support physique contient cette clé, ce qui permet son individualisation pour chaque support lors de sa fabrication. Cette individualisation peut même être différente à l'intérieur d'un même support. Par exemple, on peut affecter une clé de cryptage à chaque face d'une cassette, ou à chaque secteur physique du support, le cas échéant par groupe de secteurs.

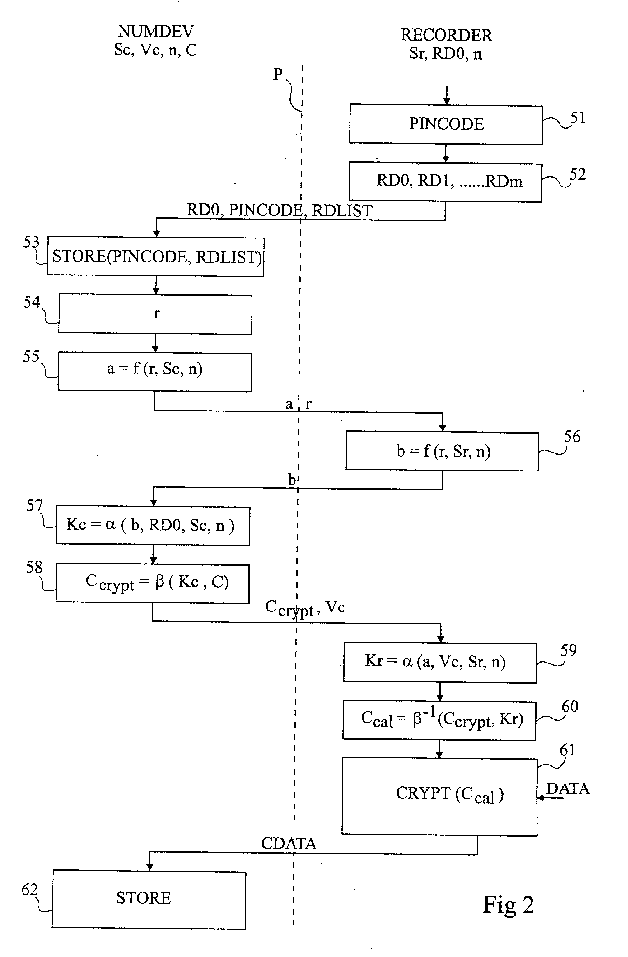

La figure 2 illustre, par un organigramme schématique, un mode de mise en oeuvre du procédé de stockage de données sécurisé selon la présente invention. En figure 2, on a représenté, à droite d'un pointillé P, les étapes exécutées dans l'enregistreur (RECORDER) et, à gauche du pointillé P, les étapes exécutées côté support physique (NUMDEV), plus précisément dans sa puce de circuit intégré.

Selon le mode préféré de mise en oeuvre de l'invention, le stockage comprend une phase d'authentification permettant le calcul d'une clé de cryptage, une phase de cryptage de la clé de chiffrement, et une phase de chiffrement des données. L'algorithme d'authentification utilisé est un algorithme symétrique à partage de clé sans transmission de cette clé. Un exemple d'un tel algorithme est décrit, par exemple, dans la demande de brevet français n° 2 716 058. On peut aussi utiliser un algorithme connu sous le nom Diffie-Hellman et décrit, par exemple, dans l'ouvrage "Applied cryptography" de B. Schneier, publié par Wiley en 1996, pages 513 à 516, ou dans le document US-A-4 200 770. Le cryptage de la clé de chiffrement est, par exemple, effectué par un algorithme connu sous le nom DES (Data Encryption Standard) et décrit, par exemple, dans l'ouvrage "Applied cryptography" susmentionné, pages 265 à 301.

Pour la mise en oeuvre du mode de réalisation de la figure 2, la puce de circuit intégré, côté support physique, doit contenir quatre quantités ou données numériques, à savoir :

- une clé d'authentification Sc propre à la puce de circuit intégré. Il peut s'agir, par exemple, d'un mot binaire enregistré dans une mémoire non-volatile de la puce de circuit intégré et/ou d'un code binaire provenant d'un réseau de paramètres physiques. Il s'agit donc d'une quantité secrète pour la mise en oeuvre de l'algorithme d'authentification.
- une quantité Vc, dite publique, pour la mise en oeuvre de l'algorithme d'authentification symétrique. Cette clé publique est fonction de la clé Sc. Elle peut être contenue à demeure dans la puce de circuit intégré (par exemple, enregistrée lors de la fabrication du support physique), enregistrée dans la puce au moment du premier stockage de données, ou encore fournie en transitant par l'enregistreur ou le lecteur lors de l'exécution de l'algorithme.
- la clé C de chiffrement des données à mémoriser sur le support physique. La clé C n'est pas utilisée pour l'authentification d'un lecteur, mais pour chiffrer les données. Cette clé C est, là encore de façon caractéristique à l'invention, stockée dans la puce de circuit intégré, voire au moins partiellement dans un réseau de paramètres physiques (PPN) directement sur le silicium.
- un nombre entier n, propre aux procédés d'authentification et de cryptage. Plus précisément, il s'agit du modulo sur lequel sont effectués les différents calculs.

Côté enregistreur, les données nécessaires sont :

- une clé secrète Sr d'authentification de l'enregistreur (à rapprocher de la clé Sc, côté support de données) et qui est donc une quantité secrète pour l'exécution de l'algorithme d'authentification.
- le code d'identification RDi (ici, RD0) de l'enregistreur. Dans l'exemple d'un algorithme de Diffie-Hellman, le code RDi est lié à la clé Sr et correspond à la clé publique. En variante, et si cela est compatible avec l'algorithme utilisé, ce code d'identification correspond, par exemple, au numéro de série ou au numéro de type de l'appareil enregistreur.
- le modulo n des opérations.

Les quantités Sc et Vc sont liées entre elles par la relation : $Vc = g^{Sc} \bmod n$, où g représente un générateur de groupe cyclique. Les quantités Sr et RDi sont liées entre elles par la relation : $RDi = g^{Sr} \bmod n$.

Dans le mode de réalisation préféré de la figure 2, l'utilisateur commence par saisir (bloc 51) un code d'authentification qui lui est propre (PINCODE). Ce code d'authentification est destiné à être enregistré sur la puce de circuit intégré lors d'un premier enregistrement afin de permettre à l'utilisateur de s'identifier ultérieurement pour une mise à jour des données. L'algorithme décrit en figure 2 correspond donc à l'algorithme d'un premier stockage de données sur un support physique vierge.

L'utilisateur enregistre ensuite (bloc 52) une liste RDLIST d'identifiants de lecteurs habilités (RD0, RD1, ..., RDi, ..., RDm). Il s'agit de la liste 31 de la figure 1 destinée à être stockée également dans la puce de circuit intégré. Cette liste pourra être prédéterminée ou non selon les applications.

Les données PINCODE, RDLIST et RD0 sont transmises par l'enregistreur au support physique, plus précisément à sa puce. Les données PINCODE et RDLIST sont mémorisées (bloc 53) dans une mémoire non-volatile (STORE(PINCODE, RDLIST)) associée à la puce du support physique. En variante, si la liste est enregistrée lors de la fabrication du support physique, on utilisera une mémoire non-réinscriptible et non-volatile.

L'étape suivante consiste, côté puce du support, à effectuer (bloc 54) le tirage d'une quantité aléatoire r.

Puis, on calcule (bloc 55) une quantité a, à partir d'une fonction f tenant compte des grandeurs r, Sc et n. Par exemple, la fonction calculée à l'étape 55 est :

$$a = r^{Sc} \bmod n.$$

Les grandeurs a et r sont ensuite transmises à l'enregistreur qui, de son côté, calcule (bloc 56) une quantité b, à partir de la fonction f identique à celle mise en oeuvre côté circuit intégré et des grandeurs r, Sr et n. Ainsi, en reprenant l'exemple ci-dessus, le bloc 56 effectue l'opération :

$$b = r^{Sr} \bmod n.$$

La grandeur b calculée par l'enregistreur est retransmise à la puce de circuit intégré. Celle-ci calcule alors (bloc 57) la clé partagée de l'algorithme de chiffrement des données qui, de son côté, est notée Kc, à partir d'une fonction α utilisant les grandeurs b, RD0, Sc et n. Dans l'exemple d'un algorithme de Diffie-Hellman, cela revient à exécuter l'opération :

$$Kc = (b*RD0)^{Sc} \bmod n.$$

La puce de circuit intégré côté support physique crypte ensuite (bloc 58) sa clé secrète C de chiffrement des données à partir d'un algorithme symétrique β (par exemple de type DES) qui utilise comme argument la clé Kc de cryptage calculée à l'étape 57. La fonction β fournit une clé de chiffrement cryptée Ccrypt.

Les grandeurs Ccrypt et Vc sont alors transmises à l'enregistreur qui, de son côté, recalcule (bloc 59) une clé de cryptage Kr en mettant en oeuvre le même algorithme α, mais appliqué aux grandeurs a, Vc, Sr et n. Dans l'exemple de l'algorithme de Diffie-Hellman, cela revient à exécuter l'opération :

$$Kr = (a*Vc)^{Sr} \bmod n.$$

Connaissant la clé de cryptage Kr, l'enregistreur reconstitue la clé de chiffrement à appliquer aux données en appliquant l'algorithme inverse à l'algorithme symétrique de l'étape 58 côté circuit intégré. Cela revient à calculer (bloc 60) une clé de chiffrement $C_{cal}$ en mettant en oeuvre une fonction $\beta^{-1}$ avec les arguments Ccrypt et Kr. Avec un algorithme de cryptage symétrique, la grandeur Ccal est égale à la grandeur C correspondant à la quantité secrète de la puce de circuit intégré.

D'autres procédés de transfert crypté de la clé secrète C de la puce pourront être mis en oeuvre en tenant compte du niveau de sécurité adapté. Outre des algorithmes symétriques comme celui décrit dans le document FR-A-2 716 058 susmentionné, on pourra aussi utiliser des algorithmes asymétriques. Par exemple, l'algorithme connu sous le nom RSA pourra être utilisé en veillant à respecter les contraintes du protocole dans la définition des valeurs. L'algorithme RSA sera utilisé en tant qu'algorithme de transfert crypté de la clé de chiffrement des données. Un exemple d'algorithme RSA est décrit dans l'ouvrage "Applied cryptography" susmentionné, pages 466 à 474 et dans le document US-A-4 405 829.

Il reste ensuite à l'enregistreur à chiffrer (bloc 61) les données DATA en utilisant la clé Ccal. N'importe quelle méthode de chiffrement ou cryptage de données à clé unique pourra être utilisée. Par exemple, on pourra appliquer l'algorithme décrit dans l'article "MPEG Video Encryption in real time using secret key cryptography" de C. Shi, S-Y. Wang et B. Bhargava, publié par le "department of computer science of Purdue university" en 1999.

Les données chiffrées CDATA sont ensuite enregistrées (bloc 62, STORE) par l'enregistreur sur le support physique (ici, pas la puce de circuit intégré, mais le support physique de données proprement dit). Cela constitue la dernière étape du procédé de stockage ou d'enregistrement selon l'invention.

Une fois stockées, les données CDATA ne peuvent être déchiffrées que par un lecteur qui est non seulement capable de mettre en oeuvre des algorithmes d'authentification et de cryptages symétriques pour récupérer la clé de chiffrement C mais qui, de plus, est présent dans la liste des lecteurs habilités, stockée sur la puce de circuit intégré.

Le fait que la clé Ccal, constituant une donnée secrète du support physique, soit connue par l'enregistreur n'est pas gênant. En effet, cette donnée secrète qui est propre au support physique pourrait tout au plus être réutilisée pour déchiffrer ses propres données. Toutefois, comme l'enregistreur initial correspond à l'utilisateur qui a les droits les plus étendus pour fixer les conditions d'utilisation du support physique, il n'est pas gênant qu'il connaisse cette clé.

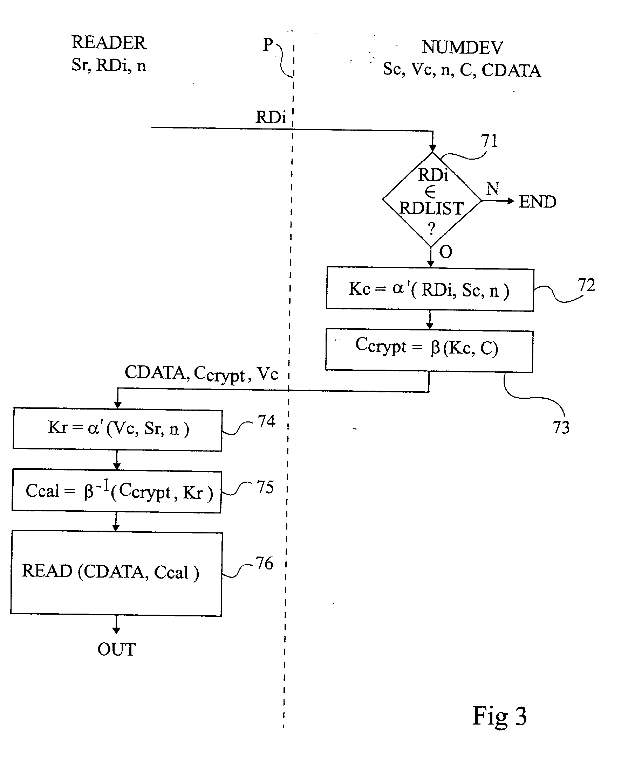

La figure 3 illustre, par un organigramme schématique, à rapprocher celui de la figure 2, un mode de mise en oeuvre d'un procédé de lecture (d'extraction) de données chiffrées d'un support physique selon l'invention. En figure 3, les étapes effectuées côté lecteur (READER) ont été placées à gauche du pointillé P et les étapes mises en oeuvre côté support physique (NUMDEV) à droite de ce pointillé.

Les quantités ou clés connues du lecteur sont Sr, n, et RDi qui constituent l'identifiant du lecteur (dans l'exemple, sa clé publique).

Côté support physique, les quantités ou clés utilisées sont Sc, Vc, n et C, comme lors du stockage. Toutefois, les données chiffrées CDATA sont désormais également présentes.

La première étape du procédé de lecture consiste, pour le lecteur (après introduction du support dans le lecteur et exécution des procédures de démarrage habituelles), à envoyer à destination du support physique (plus précisément du circuit intégré) son code d'identification RDi.

Côté support physique, on vérifie (bloc 71) si le lecteur fait partie de la liste (RDLIST) des lecteurs habilités.

Dans la négative, le processus s'arrête (END) et la lecture des données qui peut éventuellement être faite par le lecteur ne lui permettra pas de les déchiffrer car il n'en connaît pas la clé.

Dans l'affirmative, la puce de circuit intégré calcule (bloc 72) la clé partagée Kc de cryptage. Cela revient à exécuter une fonction α' à partir des grandeurs RDi, Sc et n. La fonction α' est, de préférence, la même que la fonction α de l'enregistrement (on réduit ainsi la taille du programme de calcul de la clé partagée), la seule différence étant dans les arguments utilisés. En lecture, on peut se dispenser de la phase d'authentification des étapes 54 à 56. Dans l'exemple de l'algorithme de Diffie-Hellman, cela revient à calculer à l'étape 72 :

$$Kc = RDi^{Sc} \bmod n.$$

La puce de circuit intégré crypte ensuite (bloc 73) sa clé secrète C de chiffrement à partir de la clé Kc en mettant en oeuvre la fonction β. La clé Ccrypt obtenue, la grandeur Vc et les données chiffrées CDATA sont ensuite transmises au lecteur.

Côté lecteur, on calcule (bloc 74) la clé de cryptage partagée Kr en mettant en oeuvre une fonction α' avec les données Vc, Sr et n. Dans l'exemple de l'algorithme de Diffie-Hellman, cela revient à exécuter l'opération :

$$Kr = Vc^{Sr} \bmod n.$$

Puis, le lecteur recalcule (bloc 75) une clé de chiffrement en mettant en oeuvre la fonction inverse de la fonction β sur la clé Ccrypt et en utilisant la clé de cryptage partagée Kr.

Le lecteur habilité a désormais en sa possession la clé de chiffrement Ccal des données qui correspond à la clé secrète C du support physique. Il est alors en mesure de lire (bloc 76) les données chiffrées CDATA en les décodant (READ(CDATA, Ccal)). Ces données déchiffrées sont alors restituées (OUT) par tout moyen classique en fonction de l'application du lecteur.

Le fait que le lecteur connaisse la clé secrète C = Ccal du support physique n'est pas gênant. En effet, cette clé est propre au support physique et il s'agit d'un lecteur autorisé. Par conséquent, la connaissance de cette clé par un tiers non autorisé n'aurait pas d'utilité, que ce soit pour exploiter un autre support physique qui disposerait alors d'une autre clé de chiffrement, ou pour utiliser ce support physique dans un autre lecteur dans la mesure où cet autre lecteur ne passerait pas le test 71 préalable à la transmission des données cryptées CDATA par la puce de circuit intégré.

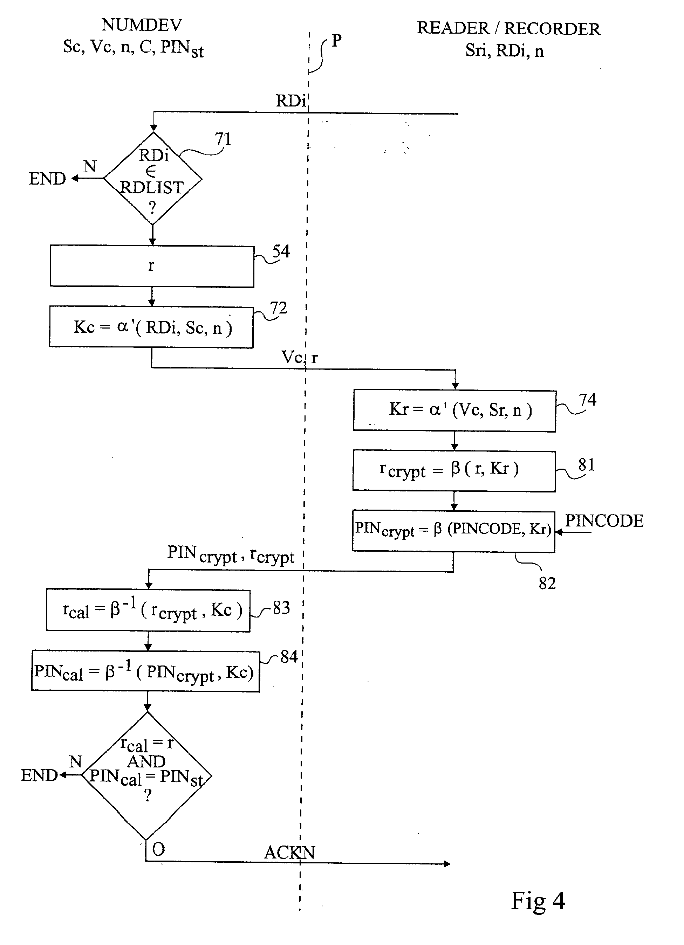

La figure 4 illustre un mode de mise en oeuvre d'un procédé de modification des données stockées dans le support physique de l'invention et/ou dans sa puce. En figure 4, les étapes exécutées côté lecteur-enregistreur (READER/RECORDER) ont été illustrées à droite du pointillé P. Celles exécutées côté support physique (plus précisément par sa puce de circuit intégré) ont été illustrées à gauche du pointillé P.

Les données contenues dans la puce du circuit intégré du support physique sont Sc, Vc, n, C et PINst, où PINst représente la clé d'authentification de l'utilisateur que celui-ci a mémorisé dans le support lors du premier enregistrement (figure 2). Cette clé était bien entendu présente lors du procédé de lecture, sans toutefois y être utilisée.

Côté lecteur-enregistreur, les données utilisées sont Sr, RDi et n.

Comme pour une lecture, le lecteur-enregistreur commence par s'identifier en transmettant son identifiant RDi à la puce de circuit intégré. Celui-ci teste alors (bloc 71) si le lecteur est bien habilité. Dans la négative le processus s'arrête (END).

Dans l'affirmative, la puce de circuit intégré effectue (bloc 54) le tirage d'un nombre aléatoire r.

Puis, elle calcule (bloc 72) la clé partagée Kr de cryptage à partir des données RDi, Sc et n (fonction α').

Les quantités Vc et r sont ensuite transmises par la puce de circuit intégré au lecteur-enregistreur qui calcule alors (bloc 74) la clé de cryptage Kr de son côté.

Le calcul suivant (bloc 81) consiste, côté lecteur-enregistreur, à crypter le nombre r en mettant en oeuvre l'algorithme symétrique de cryptage de clé (fonction β) avec la clé Kr. On obtient un nombre rcrypt.

L'utilisateur saisit alors son code d'authentification (PINCODE) au clavier. Le lecteur-enregistreur calcule (bloc 82) un code crypté PINcrypt à partir de la fonction de cryptage β, du code PINCODE et de la clé Kr.

Les quantités PINcrypt et rcrypt sont transmises à la puce de circuit intégré. Celle-ci calcule (bloc 83) un nombre rcal en mettant en oeuvre la fonction inverse β⁻¹ appliquée au nombre rcrypt avec la clé Kc comme clé de décryptage.

Puis, elle recalcule (bloc 84) un code d'authentification PINcal à partir de la fonction inverse β⁻¹ appliquée au code crypté PINcrypt avec la clé Kc comme clé de décryptage.

On vérifie ensuite (bloc 85), côté puce de circuit intégré, que le nombre rcal correspond bien au nombre aléatoire r du bloc 54 et que le code d'authentification PINcal correspond bien au code d'authentification PINst, stocké lors du premier enregistrement. Dans la négative le processus s'arrête (END). Dans l'affirmative, la puce de circuit intégré transmet un signal d'accord (ACKN) au lecteur-enregistreur qui est ensuite autorisé à poursuivre le processus de stockage. Les vérifications de l'étape 85 peuvent être effectuées successivement après les déterminations des nombres rcal et PINcal dont l'ordre n'est pas important.

Les étapes de la figure 4 correspondent en fait à une vérification de l'habilitation du lecteur, puis à une authentification du lecteur et de l'utilisateur. Cela permet d'être sûr que seul l'utilisateur autorisé puisse modifier les données stockées, ou attribuer le droit de lecture à un appareil donné.

Par la suite, le protocole de communication entre le support et le lecteur-enregistreur se fait de la même manière que dans la phase de stockage (figure 2).

Un avantage de la présente invention est que le chiffrement et le déchiffrement des données s'effectuent en dehors de la puce. Celle-ci n'a donc pas besoin d'une capacité de calcul importante. Elle doit simplement être dimensionnée pour être capable de recalculer les différentes clés de cryptage et de chiffrement ainsi que contenir le code d'authentification et la liste des lecteurs autorisés.

Un autre avantage de l'invention est que seul l'utilisateur initial (ou autorisé par celui-ci en lui donnant le code PINCODE) peut modifier ou effacer les données stockées ou modifier les droits d'accès à ces données.

Un autre avantage est que le système à partage de clé utilisé permet de prévoir une clé par couple (support physique, lecteur) sans pour autant devoir stocker ces clés dans les lecteurs.

On notera que, si un lecteur non autorisé envoie un identifiant public (RDi) représentant l'identifiant d'un lecteur autorisé contenu sur la liste RDLIST, il doit également posséder la clé secrète Sr de ce lecteur habilité pour avoir accès à la clé de chiffrement C qui est elle-même cryptée côté circuit intégré du support physique par la clé Kc.

Selon une variante de réalisation, la liste des lecteurs autorisés est mise à jour automatiquement lors de l'insertion du support physique dans un lecteur inconnu. Dans ce cas, le procédé de mise à jour illustré par la figure 4 est exécuté automatiquement quand un lecteur inconnu de la puce transmet son identifiant. Le code d'authentification demandé à l'utilisateur lui permet alors d'ajouter ce lecteur à la liste. Une telle variante permet à l'utilisateur autorisé d'utiliser le support physique dans n'importe quel lecteur (par exemple, dans un autoradio, ou chez un autre utilisateur).

Bien entendu, la présente invention est susceptible de diverses variantes et modifications qui apparaîtront à l'homme de l'art. En particulier, on pourra choisir tout autre algorithme de cryptage symétrique que l'algorithme DES. Celui-ci présente toutefois l'avantage de pouvoir être mis en oeuvre de façon matérielle (en logique câblée), d'être rapide et parfaitement éprouvé.

De plus, l'algorithme de Diffie-Hellman d'échange des clés peut également être remplacé par tout algorithme représentant une fonctionnalité de partage ou de transfert de clé.

En outre, les clés publiques Vc et RDi utilisées par la phase de cryptage pourront ne pas être contenues, respectivement dans le support et le lecteur. Elles pourront leur être transmises par n'importe quel système. Par exemple, on pourra envisager un système de transmission au moyen d'un réseau de télécommunication des clés publiques à destination des lecteurs et/ou un système de lecture de codes à barres représentant ces clés publiques, côté supports physiques.

## Revendications

1.  Procédé de stockage sécurisé, par un enregistreur (3), de données numériques (DATA) sur un support physique (10, 11, 12) équipé d'un moyen de calcul (1), **caractérisé en ce qu'**il comprend, lors d'une première utilisation du support en écriture, les étapes suivantes :

    mémoriser dans le support ou son moyen de calcul, et de manière non-volatile, au moins un identifiant (RDi) d'un lecteur du support ; et stocker les données de façon chiffrée (CDATA) au moyen d'une clé de chiffrement (C) indépendante du lecteur et contenue, à demeure, dans ledit support ou son moyen de calcul.

2.  Procédé de stockage selon la revendication 1, **caractérisé en ce que** la clé de chiffrement (C) est transmise à l'enregistreur (3) de façon cryptée (Ccrypt) au moyen d'un algorithme symétrique à partage de clé de cryptage (Kc, Kr) sans transmission de celle-ci.

3.  Procédé de stockage selon la revendication 2, **caractérisé en ce que** l'algorithme prend en compte un identifiant (RD0) de l'enregistreur (3).

4.  Procédé de stockage selon la revendication 1, **caractérisé en ce que** la clé de chiffrement (C) est transmise à l'enregistreur (3) de façon cryptée (Ccrypt) au moyen d'un algorithme asymétrique de transfert de clé de cryptage.

5.  Procédé de stockage selon l'une quelconque des revendications 1 à 4, **caractérisé en ce qu'**il comporte en outre, lors de la première utilisation du support en écriture, l'étape de mémoriser de manière non-volatile, sur le support (10, 11, 12) ou son moyen de calcul (1), au moins un code d'authentification (PINCODE) d'un utilisateur.

6.  Procédé de stockage selon l'une quelconque des revendications 1 à 5, **caractérisé en ce que** ledit moyen de calcul est un circuit intégré (1).

7.  Procédé de stockage selon la revendication 6, **caractérisé en ce que** la clé de chiffrement (C) est contenue dans le moyen de calcul, de préférence, au moins partiellement dans un réseau de paramètres physiques du circuit intégré (1).

8.  Procédé de stockage selon l'une quelconque des revendications 1 à 7, **caractérisé en ce que** le support (10, 11, 12) est divisé en secteurs, un code d'identification (RDi) et/ou un code d'authentification (PINCODE) étant affecté à chaque secteur ou groupes de secteurs.

9.  Procédé de stockage selon l'une quelconque des revendications 1 à 8, **caractérisé en ce qu'**il comprend les étapes suivantes :

    transmettre, de l'enregistreur (3) vers le support physique (10, 11, 12), une liste (RDLIST) d'identifiants de lecteurs (RDi) habilités ; stocker cette liste dans le support physique ; transmettre, du support physique vers l'enregistreur, une clé de chiffrement (Ccrypt) cryptée par un algorithme à partage ou transfert de clé de cryptage (Kc, Kr) ; décrypter ladite clé de chiffrement côté enregistreur ; chiffrer, côté enregistreur, les données (DATA) à stocker ; et transmettre les données chiffrées (CDATA) au support physique.

**10.** Procédé de lecture, par un lecteur (RDi), de données numériques chiffrées (CDATA) sur un support physique (10, 11, 12) équipé d'un moyen de calcul (1), **caractérisé en ce qu'**il comprend les étapes suivantes :

   communiquer au support un identifiant (RDi) du lecteur ;
   vérifier, côté support physique, que le lecteur appartient à une liste (RDLIST) de lecteurs habilités, pré-enregistrée dans le support ou son moyen de calcul ; et
   dans l'affirmative, transmettre au lecteur les données chiffrées et une clé de chiffrement cryptée (Ccrypt), pour lui permettre de déchiffrer les données.

**11.** Procédé de lecture selon la revendication 10, **caractérisé en ce que** le cryptage de la clé de chiffrement (C) est effectué par ledit moyen de calcul (1) du support physique (10, 11, 12) au moyen d'un algorithme symétrique à partage de clé de cryptage (Kc, Kr) sans transmission de celle-ci.

**12.** Procédé de lecture selon la revendication 11, **caractérisé en ce que** l'algorithme prend en compte l'identifiant (RDi) du lecteur.

**13.** Procédé de lecture selon la revendication 10, **caractérisé en ce que** le cryptage de la clé de chiffrement (C) est effectué par ledit moyen de calcul (1) du support physique (10, 11, 12) au moyen d'un algorithme asymétrique à transfert de clé de cryptage.

**14.** Procédé de lecture selon l'une quelconque des revendications 10 à 13, **caractérisé en ce qu'**il comprend, en cas de vérification négative de l'existence du lecteur dans la liste (RDLIST) des lecteurs habilités, les étapes suivantes :

   demander un code d'authentification (PINCODE) ;
   comparer ce code à un code (PINst) pré-enregistré dans le support physique (10, 11, 12) ou son moyen de calcul (1) ; et
   en cas d'identité des codes : autoriser une modification de la liste des lecteurs habilités sur le support physique ou son moyen de calcul.

**15.** Procédé de lecture selon l'une quelconque des revendications 10 à 14, **caractérisé en ce que** les données chiffrées ont été enregistrées par un procédé de stockage selon l'une quelconque des revendications 1 à 9.

**16.** Support physique (10, 11, 12) de données numériques, **caractérisé en ce qu'**il comporte un circuit intégré (1) pour la mise en oeuvre du procédé de stockage selon l'une quelconque des revendications 1 à 9.

**17.** Support physique (10, 11, 12) de données numériques, **caractérisé en ce qu'**il comporte un circuit intégré (1) pour la mise en oeuvre du procédé de lecture selon l'une quelconque des revendications 10 à 14.

**18.** Enregistreur de données numériques sur un support physique, **caractérisé en ce qu'**il comporte des moyens pour mettre en oeuvre le procédé de stockage selon l'une quelconque des revendications 1 à 9.

**19.** Lecteur de données numériques sur un support physique, **caractérisé en ce qu'**il comporte des moyens pour mettre en oeuvre le procédé de lecture selon l'une quelconque des revendications 10 à 14.

Fig 1

NUMDEV
Sc, Vc, n, C

RECORDER
Sr, RD0, n

P

| 51 |
|---|
| PINCODE |

| 52 |
|---|
| RD0, RD1, ......RDm |

RD0, PINCODE, RDLIST

53 | STORE(PINCODE, RDLIST) |

54 | r |

55 | $a = f(r, Sc, n)$ |

a , r

56 | $b = f(r, Sr, n)$ |

b

57 | $Kc = \alpha(b, RD0, Sc, n)$ |

58 | $C_{crypt} = \beta(Kc, C)$ |

$C_{crypt}$ , Vc

59 | $Kr = \alpha(a, Vc, Sr, n)$ |

60 | $C_{cal} = \beta^{-1}(C_{crypt}, Kr)$ |

61 | CRYPT ($C_{cal}$) | ← DATA |

CDATA

62 | STORE |

Fig 2

READER
Sr, RDi, n

P

NUMDEV
Sc, Vc, n, C, CDATA

RDi

$RDi \in RDLIST ?$  — 71

N → END

O

$Kc = \alpha'(RDi, Sc, n)$ — 72

$Ccrypt = \beta(Kc, C)$

73

CDATA, Ccrypt, Vc

$Kr = \alpha'(Vc, Sr, n)$ — 74

$Ccal = \beta^{-1}(Ccrypt, Kr)$ — 75

READ (CDATA, Ccal) — 76

OUT

Fig 3

NUMDEV
Sc, Vc, n, C, $PIN_{st}$

P

READER / RECORDER
Sri, RDi, n

RDi

71

$RDi \in RDLIST ?$ — N → END

54

r

72

$Kc = \alpha'( RDi, Sc, n )$

Vc, r

$Kr = \alpha' (Vc, Sr, n )$ — 74

$r_{crypt} = \beta ( r, Kr )$ — 81

$PIN_{crypt} = \beta (PINCODE, Kr)$ ← PINCODE

82

$PIN_{crypt}$, $r_{crypt}$

$r_{cal} = \beta^{-1} ( r_{crypt}, Kc )$ — 83

$PIN_{cal} = \beta^{-1} ( PIN_{crypt}, Kc)$ — 84

$r_{cal} = r$ AND $PIN_{cal} = PIN_{st} ?$ — N → END

O

ACKN

Fig 4

**Office européen
des brevets**

**RAPPORT DE RECHERCHE EUROPEENNE**

Numéro de la demande

EP 02 35 4141

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>Y | EP 0 878 796 A (TOKYO SHIBAURA ELECTRIC CO) 18 novembre 1998 (1998-11-18)<br>* page 10, ligne 39 - page 11, ligne 32 *<br><br>* figures 1,2,26 * | 1-8,16,<br>18<br>9-15,17,<br>19 | G11B20/00 |
| Y | EP 0 874 299 A (SONY CORP)<br>28 octobre 1998 (1998-10-28)<br>* page 4, ligne 41 - page 9, ligne 14 *<br>* figures 4,6 * | 9-15,17,<br>19 | |
| A | EP 0 977 107 A (VICTOR COMPANY OF JAPAN)<br>2 février 2000 (2000-02-02)<br>* figure 8 * | 1-19 | |
| D,A | CPRM (Content Protection for Recordable Media specification),4C-Entity,<br>Revision 0.93, 28-06-2000<br>XP002204102<br>* le document en entier * | 1-19 | |
| D,A | FR 2 751 767 A (THOMSON CSF)<br>30 janvier 1998 (1998-01-30)<br>* le document en entier * | 1-19 | **DOMAINES TECHNIQUES RECHERCHES (Int.Cl.7)**<br><br>G11B |
| D,A | FR 2 716 058 A (FRANCE TELECOM ;POSTE)<br>11 août 1995 (1995-08-11)<br>* le document en entier * | 1-19 | |
| D,A | B. SCHNEIER: "Applied cryptography ; Protocols, Algorithms, and Source Code in C, second edition"<br>1996 , WILEY XP002204104<br>* page 265 - page 301 *<br>* page 466 - page 474 *<br>* page 513 - page 516 * | 1-19 | |

-/--

Le présent rapport a été établi pour toutes les revendications

| Lieu de la recherche | Date d'achèvement de la recherche | Examinateur |
|---|---|---|
| LA HAYE | 15 novembre 2002 | Barel-Faucheux, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

## RAPPORT DE RECHERCHE EUROPEENNE

Numéro de la demande

EP 02 35 4141

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | US 4 200 770 A (DIFFIE BAILEY W ET AL) 29 avril 1980 (1980-04-29) * le document en entier * | 1-19 | |
| D,A | US 4 405 829 A (ADLEMAN LEONARD M ET AL) 20 septembre 1983 (1983-09-20) * le document en entier * | 1-19 | |
| D,A | "MPEG Video Encryption in real time using secret key cryptography", C. SHI, S-Y. WANG, B. BHARGAVA, publié par le "Department of computer science of Purdue university", 1999 XP002204103 * le document en entier * | 1-19 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 15 novembre 2002 | Barel-Faucheux, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 02 35 4141

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-11-2002

| Document brevet cité au rapport de recherche | | Date de publication | Membre(s) de la famille de brevet(s) | | Date de publication |
|---|---|---|---|---|---|
| EP 0878796 | A | 18-11-1998 | EP | 0878796 A2 | 18-11-1998 |
| | | | JP | 11283327 A | 15-10-1999 |
| | | | US | 2002002466 A1 | 03-01-2002 |
| EP 0874299 | A | 28-10-1998 | JP | 11055248 A | 26-02-1999 |
| | | | CN | 1202658 A | 23-12-1998 |
| | | | CN | 1202659 A | 23-12-1998 |
| | | | EP | 0874299 A2 | 28-10-1998 |
| | | | EP | 0874300 A2 | 28-10-1998 |
| | | | JP | 11053264 A | 26-02-1999 |
| | | | US | 2001044897 A1 | 22-11-2001 |
| | | | US | 2002083319 A1 | 27-06-2002 |
| EP 0977107 | A | 02-02-2000 | JP | 2000048483 A | 18-02-2000 |
| | | | EP | 0977107 A2 | 02-02-2000 |
| FR 2751767 | A | 30-01-1998 | FR | 2751767 A1 | 30-01-1998 |
| | | | AT | 193384 T | 15-06-2000 |
| | | | DE | 69702135 D1 | 29-06-2000 |
| | | | DE | 69702135 T2 | 09-11-2000 |
| | | | DK | 912920 T3 | 30-10-2000 |
| | | | EP | 0912920 A1 | 06-05-1999 |
| | | | ES | 2147016 T3 | 16-08-2000 |
| | | | WO | 9804966 A1 | 05-02-1998 |
| | | | GR | 3034219 T3 | 29-12-2000 |
| | | | JP | 2001502102 T | 13-02-2001 |
| | | | US | 6357005 B1 | 12-03-2002 |
| FR 2716058 | A | 11-08-1995 | FR | 2716058 A1 | 11-08-1995 |
| | | | DE | 69505703 D1 | 10-12-1998 |
| | | | DE | 69505703 T2 | 02-06-1999 |
| | | | EP | 0666664 A1 | 09-08-1995 |
| US 4200770 | A | 29-04-1980 | AUCUN | | |
| US 4405829 | A | 20-09-1983 | AUCUN | | |

EPO FORM P0460

Pour tout renseignement concernant cette annexe : voir Journal Officiel de l'Office européen des brevets, No.12/82